# EUROPÄISCHE PATENTSCHRIFT

(11) **EP 1 468 518 B1**
(45) Veröffentlichungstag und Bekanntmachung des Hinweises auf die Patenterteilung: **03.08.2005**
(21) Anmeldenummer: 03731710.4
(22) Anmeldetag: 23.01.2003
(51) Int. Cl.: H04L 9/06

(54) **VORRICHTUNG UND VERFAHREN ZUM ERZEUGEN EINES BEFEHLSCODES FÜR EIN KRYPTOGRAMM**
DEVICE AND METHOD FOR GENERATING A COMMAND CODE FOR A CRYPTOGRAM
SYSTEME ET PROCEDE POUR GENERER UN CODE D'INSTRUCTIONS POUR UN CRYPTOGRAMME

(30) Priorität: 24.01.2002 DE 10202700
(43) Veröffentlichungstag der Anmeldung: 20.10.2004
(73) Patentinhaber: Infineon Technologies AG, 81669 München (DE)
(72) Erfinder: FISCHER, Wieland, 80469 München (DE); SEIFERT, Jean-Pierre, 81669 München (DE)
(74) Vertreter: Zinkler, Franz, Dipl.-Ing.
(86) Internationale Anmeldenummer: PCT/EP2003/000689
(87) Internationale Veröffentlichungsnummer: WO 2003/063408

(56) Entgegenhaltungen:
- WO-A-01/61914
- WO-A-99/67766
- T.S. MESSERGES: "Investigations of Power Analysis Attacks on Smartcards" PROCEEDINGS OF USENIX WORKSHOP ON SMARTCARD TECHNOLOGY, [Online] Mai 1999 (1999-05), Seiten 151-161, XP002239799 Gefunden im Internet: <URL:http://citeseer.nj.nec.com/messerges9 9investigations.html> [gefunden am 2003-04-30] in der Anmeldung erwähnt

## Beschreibung

Die vorliegende Erfindung bezieht sich auf Kryptographieprozessoren und insbesondere auf Schutzmaßnahmen für Kryptographieprozessoren.

In kryptographischen Programmen hängt der Ablauf eines Programms direkt von geheimen Daten ab. Die geheimen Daten sind gegen Angriffe auf die kryptographischen Programme zu schützen. Die Sicherheit eines kryptographischen Programms wird als hoch angesehen, wenn geheime Daten beispielsweise nur durch sogenannte "Brute Force"-Angriffe ermittelt werden können. Solche Angriffe bestehen in dem Durchprobieren sämtlicher Möglichkeiten, um dann - statisch gesehen - die geheimen Daten zu ermitteln, wenn alle zur Verfügung stehenden Möglichkeiten durchprobiert worden sind. Zum Schutz gegen solche Angriffe werden in kryptographischen Algorithmen üblicherweise sehr lange Zahlen verarbeitet, so daß es nur mit einem astronomisch hohen Zeitaufwand möglich ist, den Kryptoalgorithmus zu "knacken".

Darüber hinaus existieren weitere sogenannte "Side-Channel"-Angriffe, die versuchen, geheime Daten auf andere Art und Weise einem Kryptoprozessor zu entlocken. Solche Side-Channel-Angriffe bestehen darin, z. B. die elektromagnetische Abstrahlung eines Kryptoprozessors zu erfassen, während dieser ein Kryptoprogramm abarbeitet. Eine weitere Eigenschaft des Kryptoprozessors, die im Rahmen einer Side-Channel-Attacke erfaßt werden kann, ist beispielsweise die Stromaufnahme der Schaltung, der Leistungsverbrauch der Schaltung, die Erwärmung der Schaltung, die Zeit, die die Schaltung zur Ausführung eines Programms benötigt, etc.

Generell kann ein Side-Channel-Angriff auf jede Eigenschaft der Schaltung ausgeführt werden, die von einer Verarbeitung einer Sequenz von Befehlen eines kryptographischen Algorithmus abhängt. Der Grund hierfür ist, daß, wenn die Eigenschaft einer Schaltung von dem kryptographischen Algorithmus abhängt, von der erfassten Eigenschaft auf den kryptographischen Algorithmus selbst und insbesondere auf geheime Daten, die im kryptographischen Algorithmus verarbeitet werden, geschlossen werden kann.

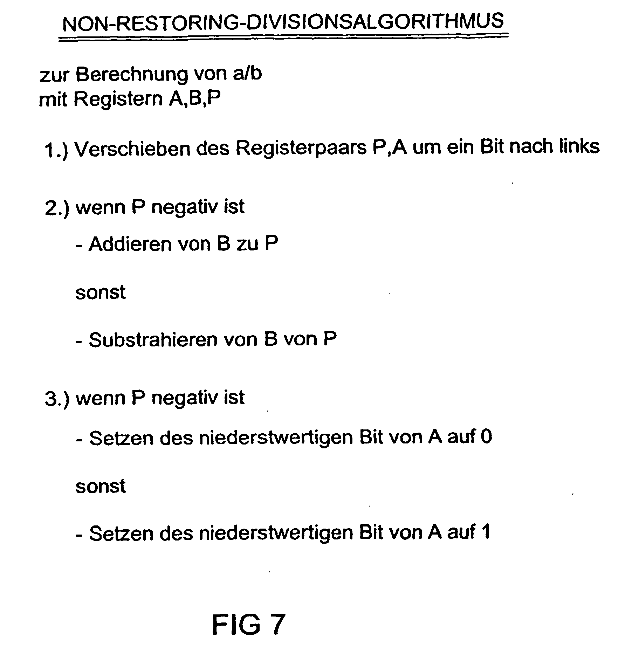

In Fig. 7 ist der sogenannte Non-Restoring-Divisionsalgorithmus schematisch dargestellt, wie er in "Computer Architecture: A Quantitative Approach", Hennessy und Patterson, Morgan Kauffmann Publishers, Inc., 1996, Anhang A.2, beschrieben ist. Dieser Divisionsalgorithmus könnte innerhalb eines kryptographischen Algorithmus verwendet werden, um das Ergebnis der Division von a im Zähler und b im Nenner zu berechnen. Hierzu werden typischerweise drei Register A, B, P verwendet. In jedem Iterationsschritt wird zunächst das Registerpaar P, A um ein Bit nach links verschoben. Dann wird eine Fallunterscheidung durchgeführt, deren Ergebnis davon abhängt, ob der vorhandene Inhalt des Registers P negativ ist oder nicht. Ist der Inhalt des Registers P negativ, so wird der Inhalt des Registers B zu dem Register P hinzuaddiert. Ist dagegen der Inhalt des Registers P positiv, so wird der Inhalt des Registers B vom Inhalt des Registers P subtrahiert. Allgemein ausgedrückt bedeutet dies, wenn angenommen wird, daß im Register P sensitive Daten stehen, daß der von einem Prozessor auszuführende Befehl, nämlich Addieren oder Subtrahieren, von den sensitiven Daten im Register P abhängt. Wenn der Prozessor eine Eigenschaft hat, wie z. B. eine Stromaufnahme, die dann, wenn der Prozessor einen Addierbefehl ausführt, unterschiedlich ist zu dem Fall, bei dem der Prozessor einen Subtrahierbefehl ausführt, so kann anhand der Leistungsaufnahme darauf geschlossen werden, ob der Inhalt des Registers P negativ oder positiv ist. Diese Rückschlüsse sind jedoch zu vermeiden, da das Register P sensitive Daten enthält.

Wie es in Fig. 7 dargestellt ist, wird der Non-Restoring-Divisionsalgorithmus nach dem Schritt 2 dadurch fortgesetzt, daß, wieder in dem Fall, wenn der Inhalt des Registers P, der nach dem Schritt 2. entstanden ist, negativ ist, das niederstwertige Bit von A auf 0 gesetzt wird, während, wenn der Inhalt des Registers P positiv ist, das niederstwertige Bit von A auf 1 gesetzt wird. Hat der Prozessor wiederum eine unterschiedliche Eigenschaft für die Aktion des Setzens des niederstwertigen Bits eines Registers auf 0 oder des Setzens des niederstwertigen Bits eines Registers auf 1, so kann wieder durch eine Erfassung der Eigenschaft des Prozessors auf den Registerinhalt P geschlossen werden, was jedoch ebenfalls zu verhindern ist, da das Register P sensitive Daten enthält, die für die Sicherheit des Kryptoalgorithmus, in dem der in Fig. 7 gezeigte Divisionsalgorithmus ausgeführt wird, von Bedeutung sind.

Der in Fig. 7 gezeigte Divisionsalgorithmus wurde lediglich beispielhaft dargestellt. Prinzipiell enthält jeder Kryptoalgorithmus Stellen, an denen die Abfolge von Befehlen, also entweder Subtraktion oder Addition, von geheimen Daten abhängt. Ist die Eigenschaft des Prozessors für solche alternativ zueinander auszuführenden Befehle, wobei die Wahl der Alternative von geheimen Daten abhängt, für die Befehlsalternativen unterschiedlich, so ist der Prozessor offen für Side-Channel-Attacken, da über eine Erfassung der Eigenschaft des Prozessors typischerweise gekoppelt mit einer Vielzahl erneuter Rechenaufgaben für den Prozessor und einer anschließenden statistischen Auswertung auf die geheimen Daten geschlossen werden kann.

Solche Attacken sind in "Investigations of power analysis attacks on smart cards", P. S. Messerges u. a., Proceedings of USENIX Workshop on Smart Card Technology, Mai 1999, S. 151 - 161 beschrieben.

In der Technik existieren mehrere Ansätze, um z. B. die Stromaufnahme eines Kryptoprozessors zu verschleiern. Ist der Kryptoprozessor beispielsweise in CMOS-Architektur aufgebaut, so korrespondiert die Stromaufnahme des Kryptoprozessors mit der Anzahl der Umschaltvorgänge, d. h. wie oft ein CMOS-Invertierer von einem logischen 0-Zustand in einen logischen 1-Zustand umgeschaltet wird. Um eine deterministische Stromaufnahme eines Kryptoprozessors zu randomisieren, könnten beispielsweise Dummy-Operationen in die Befehlssequenz eingefügt werden, so daß es einem Angreifer erschwert wird, Rückschlüsse auf die sensiblen Daten zu treffen, da er nicht weiß, welche Stromaufnahmen von einem Dummy-Befehl herrühren, und welche Stromaufnahmen im Strom-Profil von einem tatsächlichen Befehl des kryptographischen Algorithmus stammen.

Eine weitere Möglichkeit besteht in der vollständigen Dual-Rail-Lösung, bei der vereinfachend gesagt mit zueinander komplementären Daten gerechnet wird.

Nachteilig an allen diesen Verfahren ist die Tatsache, daß sie nicht universell anwendbar sind, daß sie einen hohen Chipflächenverbrauch haben und zudem einen hohen Leistungsverbrauch haben, wobei diese Nachteile insbesondere bei Chipkarten schwerwiegend sind, da hier die Chipfläche stark begrenzt ist und auch der Stromverbrauch für immer mehr aufkommende kontaktlose Anwendungen nach oben begrenzt ist.

Die WO 01/61914 bezieht sich auf ein Verhalten und eine Vorrichtung für ausgeglichene elektronische Operationen. Ausgehen von der Erkenntnis, dass das Rauschen, das durch Übergänge zwischen Datenzuständen bewirkt wird, Einfluss auf die Leistungsfähigkeit und Sicherheit von Mikroprozessoren und elektrischen Bauelementen hat, wird versucht, Berechnungen und Prozesse derart durchzuführen, dass sie eine konstante Anzahl von Bit-Übergängern haben, so dass Masseschleifen und ähnliche Effekte minimiert werden. Hierzu werden leckbehaftete Softwareprozesse durch Nachschlagtabellen ersetzt, die mit Ausgangsdaten gefüllt sind, die Ausgaben eines Softwareprozesses entsprechen, der mit entsprechenden Operanden-Werten indexiert ist. Insbesondere für Implementierungen des DES-Algorithmus dient dies dazu, Angriffe auf der Basis von Leistungsvariationen abzuwehren.

Die Aufgabe der vorliegenden Erfindung besteht darin, ein sicheres und effizientes Befehlscodekonzept zu schaffen.

Diese Aufgabe wird durch eine Vorrichtung zum Erzeugen eines Befehlscodes nach Patentanspruch 1, durch ein Verfahren zum Erzeugen eines Befehlscodes nach Patentanspruch 10, durch eine Vorrichtung zum Ausführen eines Programms nach Patentanspruch 11 oder durch ein Verfahren zum Ausführen eines Programms nach Patentanspruch 12 gelöst.

Der vorliegenden Erfindung liegt die Erkenntnis zugrunde, daß durch die Festlegung eines Befehlscodes für einen kryptographischen Prozessor der kryptographische Prozessor gegen Attacken geschützt werden kann. Erfindungsgemäß wird ein Befehlssatz in Befehlsgruppen gruppiert, wobei in jeder Befehlsgruppe die Befehle sind, die von einem Programm alternativ zueinander ausgeführt werden, d. h. durch deren Ausführung Rückschlüsse auf sensible Daten innerhalb des Programms gezogen werden könnten. Der Befehlscode wird erfindungsgemäß so gewählt, daß die Befehle innerhalb einer Befehlsgruppe durch Befehlscodewörter dargestellt werden, bei deren Verarbeitung durch eine Prozessorschaltung für sämtliche Befehle innerhalb der Befehlsgruppe Eigenschaften der Prozessorschaltung bedingt werden, die in einem vorbestimmten Bereich liegen, wobei der vorbestimmte Bereich bei einem bevorzugten Ausführungsbeispiel der vorliegenden Erfindung gleich 0 ist.

In anderen Worten ausgedrückt bedeutet dies, daß für die Verarbeitung sämtlicher Befehlscodewörter von Befehlen in einer Gruppe die Schaltung, wenn sie diese Befehlscodewörter verarbeitet, dieselbe Eigenschaft hat, d. h. dieselbe Stromaufnahme, denselben Leistungsverbrauch, dieselbe elektromagnetische Abstrahlung, denselben Zeitverbrauch, dieselbe Erwärmung etc. aufweist. Damit ist es, wenn der vorbestimmte Bereich klein gewählt ist, nur noch mit erheblichem Aufwand möglich, Side-Channel-Angriffe gegen einen Kryptoprozessor, der mit dem erfindungsgemäßen Befehlscode arbeitet, auszuführen, wobei die Stichhaltigkeit solcher Side-Channel-Angriffe immer kleiner wird, je kleiner der vorbestimmte Bereich ist. In dem Fall, in dem die Eigenschaft des Prozessors für sämtliche Befehls-Codewörter in einer Befehlsgruppe gleich ist, verschwindet die Wirkung von Side-Channel-Angriffen.

Bei einem bevorzugten Ausführungsbeispiel der vorliegenden Erfindung werden die Befehls-Codewörter einer Gruppe so gewählt, daß sie das identische Hamming-Gewicht haben, d. h. daß die Anzahl von Einsen in einem binären Befehls-Codewort für alle Befehls-Codewörter einer Befehlsgruppe identisch ist.

Bevorzugte Ausführungsbeispiele der vorliegenden Erfindung werden nachfolgend Bezug nehmend auf die beiliegenden Zeichnungen detailliert erläutert. Es zeigen:
- Fig. 1: eine schematische Darstellung einer Vorrichtung und eines Verfahrens zum Erzeugen eines Befehlscodes;
- Fig. 2: eine schematische Darstellung einer Vorrichtung und eines Verfahrens zum Ausführen eines Programms mit einer Abfolge von Befehlen;
- Fig. 3: eine schematische Darstellung eines kryptographischen Algorithmus, bei dem die Befehle B1 und B2 abhängig von sensiblen Daten P alternativ zueinander ausgeführt werden und somit eine Befehlsgruppe bilden;
- Fig. 4: eine Tabelle für verschiedene Befehlsarten und zugeordnete Hexadezimal- oder Binär-Codes;
- Fig. 5: eine Tabelle zur Darstellung verschiedener Befehlsparameter mit zugeordneten Hexadezimal- und BinärCodes;
- Fig. 6: eine Tabelle zur Darstellung einer beispielhaften Befehlsgruppe bzw. von mehreren beispielhaften Befehlsgruppen; und
- Fig. 7: eine Übersichtsdarstellung des bekannten Non-Restoring-Divisionsalgorithmus.

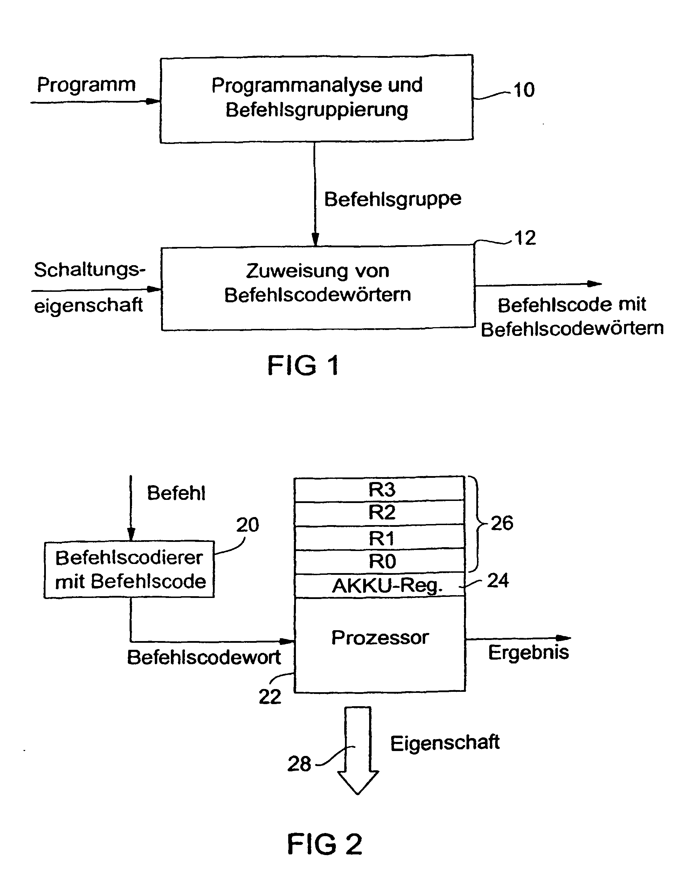

Fig. 1 zeigt eine erfindungsgemäße Vorrichtung zum Erzeugen eines Befehlscodes mit einer Mehrzahl von Befehls-Codewörtern, wobei jedes Befehls-Codewort einem Befehl aus einem Befehlssatz zugeordnet ist. Die erfindungsgemäße Vorrichtung umfaßt zunächst eine Einrichtung 10 zum Bereitstellen einer Befehlsgruppe, wobei die Befehlsgruppe Befehle aus dem Befehlssatz umfaßt, die in Abhängigkeit einer Entscheidung in einem zu verarbeitenden Programm alternativ zueinander ausführbar sind. Die erfindungsgemäße Vorrichtung umfaßt ferner eine Einrichtung 12 zum Zuweisen von Befehls-Codewörtern zu den Befehlen der Befehlsgruppe, wobei die zugewiesenen Codewörter voneinander unterschiedlich sind und ferner derart ausgebildet sind, daß eine Eigenschaft einer Schaltung, die von einer Verarbeitung der Befehlscodewörter abhängt, für die Befehlscodewörter der Befehlsgruppe in einem vorbestimmten Bereich liegt. Die Einrichtung 12 erzeugt als Ausgabe einen Befehlscode mit Befehlscodewörtern, die von einem Prozessor verwendet werden kann, der unter Verwendung des erfindungsgemäßen Befehlscodes ein kryptographisches Programm abarbeitet, das gegen Side-Channel-Angriffe sicherer bzw. im optimalen Fall, bei dem die Eigenschaft der Schaltung für alle Befehlscodewörter einer Befehlsgruppe im wesentlichen identisch ist, sicher ist, so daß Side-Channel-Angriffe prinzipiell wirkungslos sind.

An dieser Stelle sei darauf hingewiesen, daß die Eigenschaft einer Schaltung, die eine Schaltung hat, wenn sie ein Befehls-Codewort ausführt, z. B. die Stromaufnahme der Schaltung, der Leistungsverbrauch der Schaltung, der Zeitbedarf der Schaltung oder die elektromagnetische Abstrahlung der Schaltung sein kann, wobei als Spezialfall der elektromagnetischen Abstrahlung auch die Erwärmung der Schaltung, so sie erfaßbar ist, zu nennen ist.

Befehls-Codewörter in einer Befehlsgruppe werden so definiert, daß eine Schaltung, wie z. B. ein Prozessor auf einer SmartCard, der ein Befehls-Codewort verarbeitet, eine bestimmte Eigenschaft, wie z. B. einen bestimmten Stromverbrauch hat, der vorzugsweise identisch ist zu dem Stromverbrauch der Schaltung, wenn dieselbe ein anderes Befehls-Codewort ausführt, das einem Befehl aus derselben Befehlsgruppe zugeordnet ist.

Fig. 2 zeigt eine schematische Darstellung einer Vorrichtung zum Ausführen eines Programms mit einer Abfolge von Befehlen, bei der der z. B. gemäß Fig. 1 erzeugte Befehlscode verwendet wird. Ein Befehl eines Programms wird einem Befehlscodierer 20 zugeführt, in dem der von der Einrichtung 12 von Fig. 1 ausgegebene Befehlscode abgespeichert ist. Der Befehlscodierer 20 gibt ein Befehlscodewort aus, das einem Prozessor 22 zum Verarbeiten des Befehlscodeworts zugeführt wird. Der Prozessor kann beispielsweise ein Akkumulator-Register 24 sowie weitere Register 26 umfassen, die in Fig. 2 mit R0, R1, R2 und R3 bezeichnet sind. Der Prozessor gibt ein Ergebnis aus, das durch die Ausführung des Befehls, d. h. durch die Verarbeitung des Befehlscodeworts erzeugt worden ist. Bei der Verarbeitung des Befehlscodeworts zeigt der Prozessor 22 eine spezielle Eigenschaft 28, die, wie es ausgeführt worden ist, bei einem bevorzugten Ausführungsbeispiel der vorliegenden Erfindung für die Verarbeitung der Befehlscodewörter einer Befehlsgruppe im wesentlichen identisch ist, so daß Side-Channel-Angriffe, die auf die Eigenschaft 28 des Prozessors 22 aufsetzen, wirkungslos bleiben müssen.

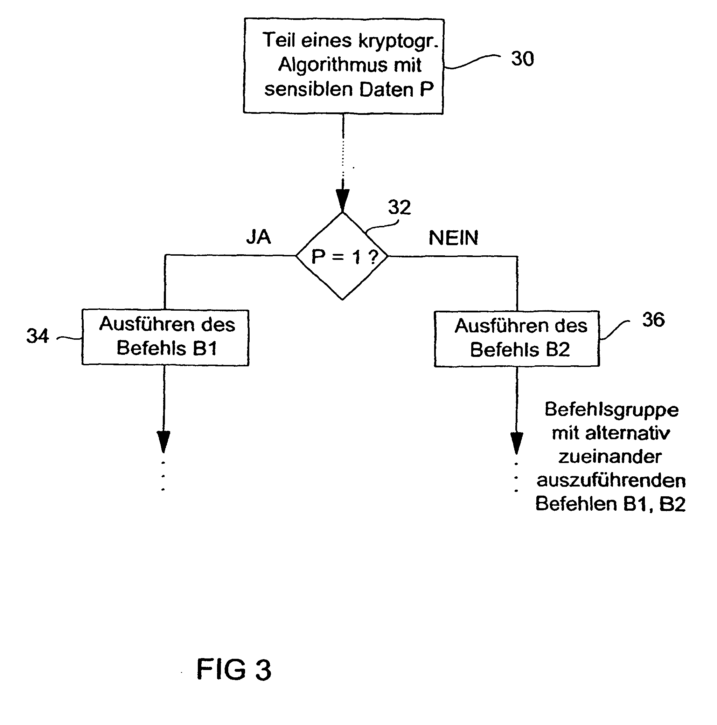

Fig. 3 zeigt schematisch einen Kryptoalgorithmus, d. h. ein Programm, das bei einem bevorzugten Ausführungsbeispiel der vorliegenden Erfindung analysiert wird, um festzustellen, welche Befehle in eine Befehlsgruppe kommen sollen, so daß ihnen Befehls-Codewörter zugewiesen werden, bei deren Verarbeitung ein Prozessor vorzugsweise eine identische Eigenschaft aufweist. Der in Fig. 3 dargestellte Kryptoalgorithmus als Beispiel für ein Programm umfaßt einen Teil 30 des kryptographischen Algorithmus, einen Entscheidungsblock 32 sowie zwei zueinander alternativ auszuführende Befehle 34 und 36. In dem Entscheidungsblock 32 wird beispielsweise überprüft, ob die sensiblen Informationen, wie z. B. ein Bit P, eine logische "1" oder eine logische "0" umfaßt. Wird die Frage mit "Ja" beantwortet, so wird der Befehl B1 auszuführen sein (Schritt 34), während, wenn die Frage im Entscheidungsblock 32 mit "Nein" beantwortet wird, der Befehl B2 auszuführen sein wird (36). Die Befehle B1 und B2 sind somit alternativ auszuführende Befehle und werden daher in ein- und dieselbe Befehlsgruppe gruppiert.

Je nach Anwendungsfall kann die Gruppierung der Befehle in Befehlsgruppen entweder für jedes Programm spezifisch durchgeführt werden, um die optimale Sicherheit zu erreichen, was insbesondere bei Chipkarten-Anwendungen der Fall sein wird. Alternativ kann jedoch auch, um die Sicherheit von bestehenden Programmen zumindest zu verbessern, eine Befehlsgruppierung nach Erfahrungsaspekten vorgenommen werden, so daß nicht jedes Programm hinsichtlich seiner Entscheidungen und alternativ auszuführenden Befehle für sich analysiert werden muß, sondern daß ein Befehlscode eingesetzt wird, der nach Erfahrungsgesichtspunkte für viele in Frage kommenden Programme zumindest die überwiegende Mehrzahl von Befehlsalternativen gemäß Fig. 3 umfaßt. Selbst wenn nicht alle alternativ auszuführenden Befehle in einem kryptographischen Programm mit einer Vielzahl von Entscheidungen gemäß Fig. 3 in ein- und derselben Befehlsgruppe sind, so wird die Sicherheit des Kryptoprozessors zwar nicht hundertprozentig optimiert, jedoch im Vergleich zu einem beliebig gewählten Befehlscode erheblich erhöht.

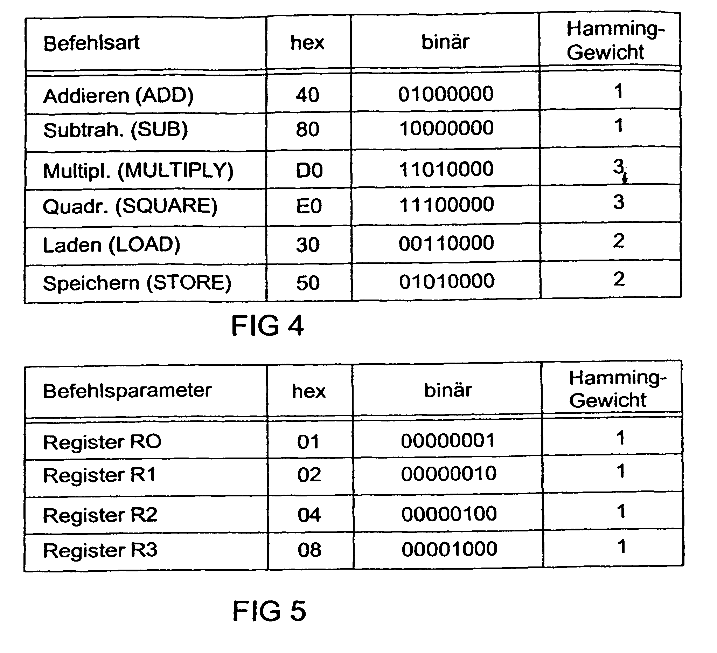

Bei einem beispielhaften Befehlssatz, wie er nachfolgend anhand der Fig. 4, 5 und 6 erläutert werden wird, besteht jeder Befehl aus einem ersten Teil, der eine Befehlsart spezifiziert, und aus einem zweiten Befehlsteil, der einen Befehlsparameter spezifiziert. Wie es in Fig. 4 gezeigt ist, existieren bei dem hier dargestellten beispielhaften Befehlssatz sechs verschiedene Befehlsarten, nämlich die Befehlsarten Addieren (ADD), Subtrahieren (SUB), Multiplizieren (MULTIPLY), Quadrieren (SQUARE), Laden (LOAD) und Speichern (STORE). Die hexadezimale Darstellung der einzelnen Befehlsarten ist in der zweiten Spalte von Fig. 3 dargestellt. In der dritten Spalte von Fig. 3 ist die binäre Darstellung gezeigt, während in der vierten Spalte von Fig. 4 das Hamming-Gewicht der einzelnen Befehlsart-Codes aus der dritten Spalte angegeben ist.

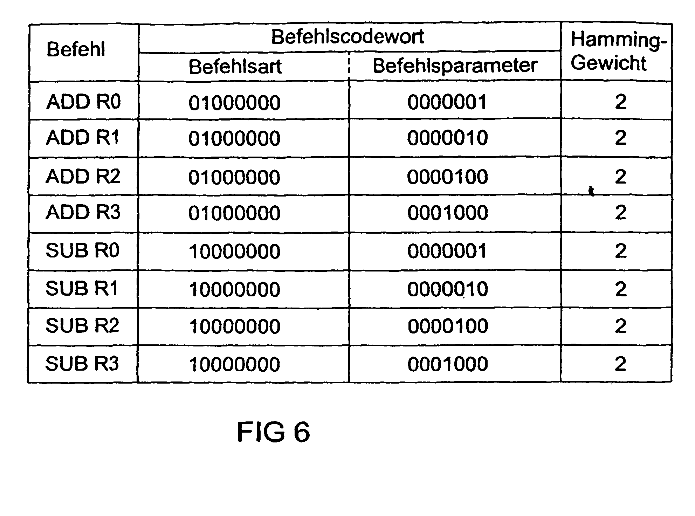

In Fig. 5 sind vier verschiedene Befehlsparameter dargestellt, nämlich die Befehlsparameter R0, R1, R2 und R3. In der zweiten Spalte von Fig. 5 ist die hexadezimale Darstellung für jeden Befehlsparameter gezeigt, während in der dritten Spalte von Fig. 5 der binäre Befehlsparametercode gegeben ist. Die letzte Spalte von Fig. 5 zeigt wieder das Hamming-Gewicht jedes Befehlsparametercodes der dritten Spalte von Fig. 5.

Die in den Fig. 4 und 5 dargestellte Befehlsarchitektur bezieht sich auf eine sogenannte Akkumulator-Prozessorarchitektur, wie sie der in Fig. 2 dargestellte Prozessor beispielhaft aufweist. Ein vollständiges Befehls-Codewort bei der hier gezeigten Befehlsarchitektur umfaßt einen oberen Abschnitt, der auch als Nibble bezeichnet wird, der die Befehlsart spezifiziert, und einen unteren Abschnitt, der ebenfalls als Nibble bezeichnet wird, für den Befehlsparametercode. Ein in Fig. 6 gezeigtes Befehls-Codewort umfaßt somit 16 Bit, wobei die oberen acht Bit die Befehlsart spezifizieren, während die unteren acht Bit den Befehlsparameter spezifizieren. Der in der ersten Zeile von Fig. 6 dargestellte Befehl Add R0, der in Worten ausgedrückt bedeutet, daß auf das Akkumulator-Register 24 von Fig. 2 der Inhalt des Registers R0 addiert werden soll, umfaßt bei dem in Fig. 6 verwendeten erfindungsgemäßen Befehlscode zwei binäre Einsen. Dies bedeutet in anderen Worten, daß das Hamming-Gewicht für das Befehls-Codewort, das dem Befehl Add R0 zugeordnet ist, gleich 2 ist.

Bei dem hier beschriebenen Ausführungsbeispiel der vorliegenden Erfindung ist die Schaltung, die einen Befehl ausführt, d. h. die ein Befehls-Codewort verarbeitet, eine CMOS-Schaltung, bei der die Eigenschaft der Schaltung, die von der Verarbeitung des Befehls-Codeworts ausführt, wie z. B. die Stromaufnahme der Schaltung, nicht von den Ruhezuständen abhängt, sondern von den Umschaltvorgängen.

Da ferner bei dem hier beschriebenen bevorzugten Prozessor vor jedem neuen Laden eines Befehls-Codeworts in den Prozessor der Steuereingang in den Prozessor zu 0 gesetzt wird, ist die Anzahl der Einsen in einem Befehls-Codewort direkt proportional zu dem Leistungsverbrauch des Prozessors bei der Verarbeitung des Befehls-Codeworts, d. h. zu der Anzahl von Umschaltvorgängen.

Das Nullsetzen des Steuereingangs kann beispielsweise durch Einfügen eines Null-Befehls, der auch als NOP (= No Operation) bezeichnet wird, erreicht werden, wobei der Befehlscode für den NOP lauter Nullen umfaßt, so daß alle Steuerleitungen auf Null sehen. Wird der NOP mit lauter Einsen codiert, so hat dies dieselbe Wirkung, da die Zustandsübergänge am Steuereingang ausschlaggebend sind.

Der bevorzugteste Befehlscode für diesen speziellen Prozessor umfaßt daher Befehls-Codewörter für Befehle aus einer Befehlsgruppe, die ein identisches Hamming-Gewicht haben, d. h. bei denen die Anzahl der Einsen im Befehls-Codewort gleich ist. Für andere Prozessorarchitekturen bzw. für anderen Prozessor-Betriebsweisen, bei denen nicht vor jedem Befehlsladen eine Initialisierung des Steuereingangs des Prozessors auf 0 stattfindet, können andere Befehlscode-Eigenschaften als das Hamming-Gewicht eines Befehls-Codeworts verwendet werden.

Wie es bereits ausgeführt worden ist, umfaßt der in Fig. 7 gezeigte Divisionsalgorithmus im Schritt 2 zwei Befehle Addieren, Subtrahieren, die in einer Befehlsgruppe sind. Für die in den Tabellen von Fig. 4 und 6 beschriebene Befehlsarchitektur bedeutet dies, daß das Hamming-Gewicht des Befehlsartcodes für den Addieren-Befehl identisch ist zu dem Hamming-Gewicht für den Befehlsartcode des Subtrahieren-Befehls (SUB) ist.

Ferner wird es bevorzugt, den Befehlsparametercode für jeden Befehlsparameter identisch zu wählen, wie es in Fig. 5 dargestellt ist. Fig. 6 zeigt daher eine Befehlsgruppe mit acht einzelnen Befehlen bzw. einzelnen Befehls-Codewörtern, die alle dasselbe Hamming-Gewicht haben. Wenn nunmehr für die in dem zweiten Schritt von Fig. 7 verwendeten alternativen Befehle Befehls-Codewörter gemäß Fig. 6 verwendet werden, wie es bei der vorliegenden Erfindung der Fall ist, so wird kein Side-Channel-Angriff einen Hinweis darauf liefern, ob P nun negativ ist oder nicht.

Weitere Befehlsgruppen ergeben sich dadurch, wenn bei der in Fig. 6 gezeigten Tabelle der Befehl ADD durch den Befehl MULTIPLY ersetzt wird, und wenn ferner der Befehlsartcode in Fig. 6 durch den entsprechenden Befehlsartcode für den Multiplizieren-Befehl von Fig. 4 ersetzt wird. Darüber hinaus ist in Fig. 6 der Befehl "SUB" durch den Befehl "SQUARE" und ferner der Befehlsartcode aus Fig. 4 für den Quadrieren-Befehl zu verwenden, so daß sich eine weitere Befehlsgruppe in Analogie zu Fig. 6 ergibt, jedoch mit den Befehlsarten Multiplizieren und Quadrieren.

Eine weitere Befehlsgruppe wird erhalten, wenn die anhand der Befehlsgruppe mit den Befehlsarten Multiplizieren und Quadrieren beschriebene Prozedur durchgeführt wird, nun jedoch für die Befehle Laden (LOAD) und Speichern (STORE).

Aus Fig. 7 wird ferner ersichtlich, daß auch die beiden alternativ auszuführenden Befehle aus dem dritten Schritt des Algorithmus in einer Befehlsgruppe zu gruppieren sind, so daß, wenn diese beiden Befehle dasselbe Hamming-Gewicht haben, eine Side-Channel-Attacke auch keine Aussagen dahingehend zulassen wird, ob der Inhalt des Registers P nach dem Schritt 2 nun positiv oder negativ ist.

Es sei ferner darauf hingewiesen, daß eine Befehlsgruppe nicht unbedingt sämtliche in Fig. 6 gezeigten Befehle umfassen muß. Alle in Fig. 6 tabellarisch aufgeführten Befehle haben dasselbe Hamming-Gewicht, so daß auch kleinere Befehlsgruppen gebildet werden können, die - je nach kryptographischem Programm - zumindest zwei Befehle der in Fig. 6 aufgeführten Befehle umfassen können.

Das erfindungsgemäße Konzept ist zum Schutz von kryptographischen Programmen vorgesehen, bei dem der Ablauf des Programms direkt von den geheimen Daten abhängt. Mit geeigneten Meßmethoden, wie z. B. einer Stromanalyse oder einer elektromagnetischen Abstrahlung, ist es möglich, den zum geheimen Datum korrespondierenden Ablauf des Programms zu analysieren. So kann es z. B. sein, daß der Wert eines bestimmten Bits des geheimen Schlüssels direkt korrespondiert zu einem Paar wie etwa ADD/SUB, SQUARE/MULTIPLY oder STORE Ri/STORE Rj, usw. Da in gewöhnlichen Befehlssätzen solche Paare durch das Hamming-Gewicht ihres Opcodes unterschiedlich sind, wobei dieses Hamming-Gewicht in natürlicher Weise beispielsweise das Strom-profil des gesamten Chips beeinflußt, existierte bisher eine potentielle Schwachstelle gegen die Side-Channel-Attacken, die durch das erfindungsgemäße Konzept beseitigt ist. Erfindungsgemäß liefert eine Programmanalyse kritische Befehlspaare, die in der Praxis benutzt werden, sowie einen Befehlscode, durch den eine Homogenisierung des Hamming-Gewichts kritischer Befehlspaare erreicht ist. Insbesondere für eine Befehlsarchitektur mit einem oberen Abschnitt für die Befehlsart und einem unteren Abschnitt für den Befehlsparameter wird es bevorzugt, daß sowohl die Befehlsart als auch die entsprechenden Registercodierungen ein identisches Hamming-Gewicht haben, wodurch eine völlige Homogenisierung des Hamming-Gewichts kritischer Paare erreicht wird.

### Bezugszeichenliste

- 10: Einrichtung zur Programmanalyse und Befehlsgruppierung
- 12: Einrichtung zur Zuweisung von Befehlscodewörtern
- 20: Befehlscodierer
- 22: Prozessor
- 24: Akkumulator-Register
- 26: Prozessorregister
- 28: Prozessoreigenschaft
- 30: Teil eines kryptographischen Algorithmus mit sensiblen Daten
- 32: Entscheidung
- 34: Ausführen des Befehls B1
- 36: Alternatives Ausführen des Befehls B2

## Patentansprüche

1. Vorrichtung zum Erzeugen eines Befehlscodes mit einer Mehrzahl von Befehls-Codewörtern, wobei jedes Befehls-Codewort einem Befehl aus einem Befehlssatz zugeordnet ist, mit folgenden Merkmalen:
einer Einrichtung (10) zum Bereitstellen einer Befehlsgruppe mit Befehlen aus dem Befehlssatz, wobei die Befehle aus der Befehlsgruppe in Abhängigkeit einer Entscheidung (32) in einem Programm alternativ zueinander ausführbar sind; und
einer Einrichtung (12) zum Zuweisen von Befehls-Codewörtern zu den Befehlen der Befehlsgruppe, wobei die zugewiesenen Codewörter voneinander unterschiedlich sind und derart ausgebildet sind, dass eine durch eine Messung erfassbare Eigenschaft einer Schaltung, die von einer Verarbeitung der Befehls-Codewörter abhängt, für die Befehls-Codewörter der Befehlsgruppe in einem vorbestimmten Bereich ist, wobei der vorbestimmte Bereich klein oder im wesentlichen Null ist.

2. Vorrichtung nach Anspruch 1,
bei der die durch eine Messung erfassbare Eigenschaft einen Stromverbrauch, einen Leistungsverbrauch, einen Zeitverbrauch und/oder eine elektromagnetische Abstrahlung bei einer Ausführung eines Befehls-Codeworts durch die Schaltung umfasst.

3. Vorrichtung nach einem der vorhergehenden Ansprüche,
bei der die Einrichtung (12) zum Zuweisen angeordnet ist, um den Befehlen der Befehlsgruppe Befehls-Codewörter zuzuweisen, deren Hamming-Gewicht gleich groß ist.

4. Vorrichtung nach einem der vorhergehenden Ansprüche,
bei der ein Befehls-Codewort einen Befehlsartcode für eine Art des Befehls und einen Befehlsparametercode für einen Befehlsparameter umfasst, wobei der Befehlsparametercode in allen Befehlscodewörtern dasselbe Hamming-Gewicht hat.

5. Vorrichtung nach einem der vorhergehenden Ansprüche, bei dem der Befehlssatz folgende Befehlsarten aufweist:
Addieren, Subtrahieren, Multiplizieren, Quadrieren, Laden und Speichern.

6. Vorrichtung nach Anspruch 5, bei dem Befehle mit den Befehlsarten Addieren und Subtrahieren bzw. Multiplizieren/Quadrieren bzw. Laden und Speichern jeweils in einer eigenen Befehlsgruppe sind.

7. Vorrichtung nach Anspruch 6 oder 7, bei der die Befehlsparameter vier Register (R0, R1, R2, R3) aufweisen.

8. Vorrichtung nach einem der Patentansprüche 1 bis 5,
bei der eine Befehlsgruppe zwei Befehle aufweist, die Befehls-Codewörter haben, deren Befehlsartcode identisch ist, und deren Befehlsparametercode unterschiedlich ist.

9. Vorrichtung nach einem der vorhergehenden Ansprüche, bei der die Einrichtung (10) zum Bereitstellen eine Einrichtung zum Analysieren des Programms aufweist, wobei die Einrichtung zum Analysieren ausgebildet ist, um Entscheidungen (32) in dem Programm zu ermitteln, um Befehle (B1, B2), die in Abhängigkeit von einer Entscheidung alternativ zueinander ausführbar sind, zu erfassen, und um die erfassten Befehle in dieselbe Befehlsgruppe zu gruppieren.

10. Verfahren zum Erzeugen eines Befehlscodes mit einer Mehrzahl von Befehls-Codewörtern, wobei jedes Befehls-Codewort einem Befehl aus einem Befehlssatz zugeordnet ist, mit folgenden Schritten:
Bereitstellen (10) einer Befehlsgruppe mit Befehlen aus dem Befehlssatz, wobei die Befehle aus der Befehlsgruppe in Abhängigkeit einer Entscheidung (32) in einem Programm alternativ zueinander ausführbar sind; und
Zuweisen (12) von Befehls-Codewörtern zu den Befehlen der Befehlsgruppe, wobei die zugewiesenen Codewörter voneinander unterschiedlich sind und derart ausgebildet sind, dass eine durch eine Messung erfassbare Eigenschaft einer Schaltung, die von einer Verarbeitung der Befehls-Codewörter abhängt, für die Befehls-Codewörter der Befehlsgruppe in einem vorbestimmten Bereich ist, wobei der vorbestimmte Bereich klein oder im wesentlichen Null ist.

11. Vorrichtung zum Ausführen eines Programms mit einer Abfolge von Befehlen, wobei ein Befehl durch ein Befehls-Codewort eines Befehlscodes mit einer Mehrzahl von Befehls-Codeworten dargestellt ist, wobei jedes Befehlscodewort einem Befehl aus einem Befehlssatz zugewiesen ist, wobei eine Befehlsgruppe mit Befehlen aus dem Befehlssatz vorhanden ist, wobei die Befehle aus der Befehlsgruppe in Abhängigkeit einer Entscheidung (32) in dem Programm alternativ zueinander ausführbar sind, wobei die zugewiesenen Codewörter voneinander unterschiedlich sind und derart ausgebildet sind, dass eine durch eine Messung erfassbare Eigenschaft einer Schaltung, die von einer Verarbeitung der Befehls-Codewörter abhängt, für die Befehls-Codewörter der Befehlsgruppe in einem vorbestimmten Bereich ist, wobei der vorbestimmte Bereich klein oder im wesentlichen Null ist, mit folgenden Merkmalen:
einem Befehlscodierer zum Erhalten eines Befehls und zum Ausgeben eines Befehls-Codeworts für den Befehl gemäß dem Befehlscode; und
einem Prozessor zum Verarbeiten des ausgegebenen Befehls-Codeworts.

12. Verfahren zum Ausführen eines Programms mit einer Abfolge von Befehlen, wobei ein Befehl durch ein Befehls-Codewort eines Befehlscodes mit einer Mehrzahl von Befehls-Codeworten dargestellt ist, wobei jedes Befehlscodewort einem Befehl aus einem Befehlssatz zugewiesen ist, wobei eine Befehlsgruppe mit Befehlen aus dem Befehlssatz vorhanden ist, wobei die Befehle aus der Befehlsgruppe in Abhängigkeit einer Entscheidung (32) in dem Programm alternativ zueinander ausführbar sind, wobei die zugewiesenen Codewörter voneinander unterschiedlich sind und derart ausgebildet sind, dass eine durch eine Messung erfassbare Eigenschaft einer Schaltung, die von einer Verarbeitung der Befehls-Codewörter abhängt, für die Befehls-Codewörter der Befehlsgruppe in einem vorbestimmten Bereich ist, wobei der vorbestimmte Bereich klein oder im wesentlichen Null ist, mit folgenden Schritten:
Codieren eines erhaltenen Befehls und Ausgeben eines Befehls-Codeworts für den Befehl gemäß dem Befehlscode; und
Verarbeiten des ausgegebenen Befehls-Codeworts.

## Claims

1. Device for generating an operation code comprising a plurality of operation code words, wherein each operation code word is associated with an operation from a set of operations, comprising:
means (10) for providing an operation group comprising operations from the set of operations, wherein the operations from the operation group are performable alternatively to one another depending on a decision (32) within a program; and
means (12) for allocating operation code words to the operations of the operation group, wherein the allocated code words are different from one another and implemented such that a characteristic of a circuit detectable by measuring, which depends on a processing of the operation code words lies within a predetermined range for the operation code words of the operation group, wherein the predetermined range is small or substantially zero.

2. Device according to claim 1,
wherein the characteristic detectable by measuring includes a current consumption, a power consumption, a time consumption and/or an electromagnetic radiation when performing an operation code word by the circuit.

3. Device according to one of the preceding claims,
wherein the means (12) for allocating is arranged in order to allocate operation code words to the operations of the operation group, whose Hamming weight is equal.

4. Device according to one of the preceding claims,
wherein an operation code word includes an operation type code for a type of operation and an operation parameter code for an operation parameter, wherein the operation parameter code comprises the same Hamming weight in all operation code words.

5. Device according to one of the preceding claims,
wherein the set of operations comprises the following operation types:
adding, subtracting, multiplying, squaring, loading and storing.

6. Device according to claim 5, wherein operations with the operation types adding and subtracting or multiplying/squaring or loading and storing, are respectively located in an individual operation group.

7. Device according to claim 6 or 7, wherein the operation parameters comprise four registers (R0, R1, R2, R3).

8. Device according to one of claims 1 to 5,
wherein one operation group comprises two operations comprising operation code words whose operation type codes are identical and whose operation parameter codes are different.

9. Device according to one of the preceding claims,
wherein the means (10) for providing comprises means for analyzing the program, wherein the means for analyzing is implemented to determine decisions (32) within the program, to detect operations (B1, B2) which are performable alternatively to one another depending on a decision, and to group the detected operations into the same operation group.

10. Method for generating an operation code comprising a plurality of operation code words, wherein each operation code word is associated with an operation from a set of operations, comprising the following steps:
providing (10) an operation group comprising operations from the set of operations, wherein the operations from the operation group are performable alternatively to one another depending on a decision (32) within a program; and
allocating (12) operation code words to the operations of the operation group, wherein the allocated code words are different from one another and implemented such that a characteristic of a circuit detectable by measuring, which depends on a processing of the operation code words lies in a predetermined range for the operation code words of the operation group, wherein the predetermined range is small or substantially zero.

11. Device for performing a program with a sequence of operations, wherein an operation is represented by an operation code word of an operation code having a plurality of operation code words, wherein each operation code word is associated with an operation from a set of operations, wherein there is an operation group comprising operations from the set of operations, wherein the operations from the operation group are performable alternatively to one another depending on a decision (32) within the program, wherein the associated code words are different from one another and implemented such that a characteristic of a circuit detectable by measuring, which depends on a processing of the operation code words is located within a predetermined range for the operation code words of the operation group, wherein the predetermined range is small or substantially zero, comprising: .
an operation encoder for obtaining an operation and for outputting an operation code word for the operation according to the operation code; and
a processor for processing the operation code word output.

12. Method for performing a program with a sequence of operations, wherein an operation is represented by an operation code word of an operation code having a plurality of operation code words, wherein each operation code word is associated with an operation from a set of operations, wherein there is an operation group comprising operations from the set of operations, wherein the operations from the operation group are performable alternatively to one another depending on a decision (32) within a program, wherein the associated code words are different from one another and implemented such that a characteristic of a circuit detectable by measuring, which depends on a processing of the operation code words is located within a predetermined range for the operation code words of the operation group, the predetermined range being small or substantially zero, comprising the steps of:
encoding an operation obtained and outputting an operation code word for the operation according to the operation code; and
processing the operation code word output.

## Revendications

1. Dispositif pour produire un code d'instructions comportant une pluralité de mots de code d'instructions, chaque mot de code d'instructions étant associé à une instruction d'un ensemble d'instructions, comportant les caractéristiques suivantes :
- un dispositif (10) pour mettre à disposition un groupe d'instructions comportant des instructions d'un ensemble d'instructions, les instructions du groupe d'instructions pouvant être réalisées en fonction d'une décision (32) dans un programme, en alternance les unes avec les autres ; et
- un dispositit (12) pour affecter des mots de code d'instructions aux instructions du groupe d'instructions, les mots de code affectés étant différents l'un de l'autre et étant réalisés de telle manière qu'une propriété d'un circuit détectable par une mesure, qui dépend d'un traitement des mots de code d'instructions, est pour les mots de code d'instructions du groupe d'instructions dans une zone prédéterminée, la zone prédéterminée étant petite ou sensiblement égale à zéro.

2. Dispositif suivant la revendication 1,
dans lequel la propriété détectable par une mesure comprend une consommation de courant, une consommation de puissance, une expiration de temps et/ou un rayonnement électromagnétique pour une exécution d'un mot de code d'instructions par le circuit.

3. Dispositif suivant l'une des revendications précédentes,
dans lequel le dispositif (12) pour l'affectation est prévu pour affecter aux instructions du groupe d'instructions des mots de code d'instructions dont la pondération de Hamming est de même grandeur.

4. Dispositif suivant l'une des revendications précédentes,
dans lequel un mot de code d'instructions comprend un code de type d'instructions pour un type d'instruction et un code de paramètre d'instructions pour un paramètre d'instruction, le code de paramètre d'instructions ayant la même pondération de Hamming dans tous les mots de code d'instructions.

5. Dispositif suivant l'une des revendications précédentes,
dans lequel l'ensemble d'instructions comporte les types d'instructions suivants :
additionner, soustraire, multiplier, élever au carré, charger et mémoriser.

6. Dispositif suivant la revendication 5,
dans lequel des instructions ayant les types d'instructions additionnés et soustraits ou multipliés/élevés au carré ou chargés et mémorisés sont respectivement dans un groupe d'instructions propres.

7. Dispositif suivant la revendication 6 cu 7,
dans lequel les paramètres d'instructions comportent quatre registres (R0, R1, R2, R3).

8. Dispositif suivant l'une des revendications 1 à 5,
dans lequel un groupe d'instructions comporte deux instructions qui ont des mots de code d'instructions dont le code de type d'instruction est identique et dont le code de paramètre d'instructions est différent.

9. Dispositif suivant l'une des revendications précédentes,
dans lequel le dispositif (10) pour mettre à disposition comporte un dispositif pour analyser le programme, le dispositif pour analyser étant conçu pour déterminer des décisions (32) dans le programme, pour détecter des instructions (B1, B2), qui peuvent être exécutées en fonction d'une décision alternativement les unes aux autres, et pour grouper les instructions détectées dans le même groupe d'instructions.

10. Procédé pour produire un code d'instructions ayant une pluralité de mots de code d'instructions, chaque mot de code d'instructions étant associé à une instruction d'un ensemble d'instructions, comportant les étapes suivantes :
- mise à disposition (10) d'un groupe d'instructions comportant des instructions d'un ensemble d'instructions, les instructions du groupe d'instructions pouvant être exécutées en fonction d'une décision (32) dans un programme, en alternance les unes aux autres ; et
- affectation (12) de mots de code d'instructions aux instructions du groupe d'instructions, les mots de code affectés étant différents les uns des autres et étant réalisés de telle manière qu'une propriété d'un circuit détectable par une mesure, qui dépend d'un traitement des mots de code d'instructions, est, pour les mots de code d'instructions du groupe d'instructions, dans une zone prédéterminée, la zone prédéterminée étant petite ou sensiblement égale à zéro.

11. Dispositif pour exécuter un programme comportant une succession d'instructions, une instruction étant représentée par un mot de code d'instructions d'un code d'instructions ayant une pluralité de mots de code d'instructions, chaque mot de code d'instructions étant affecté à une instruction d'un ensemble d'instructions, un groupe d'instructions comportant des instructions d'un ensemble d'instructions étant présent, les instructions du groupe d'instructions pouvant être exécutées en fonction d'une décision (32) dans le programme en alternance les unes aux autres, les mots de code affectés étant différents les uns des autres et étant réalisés de telle manière qu'une propriété d'un circuit détectable par une mesure, qui dépend d'un traitement des mots de code d'instructions, est, pour les mots de code d'instructions du groupe d'instructions, dans une zone prédéterminée, la zone prédéterminée étant petite ou sensiblement nulle, comportant les caractéristiques suivantes :
un codeur d'instructions pour obtenir une instruction et pour émettre un mot de code d'instructions pour l'instruction suivant le code d'instructions ; et
un processeur pour traiter le mot de code d'instructions émis.

12. Procédé pour exécuter un programme comportant une succession d'instructions, une instruction étant représentée par un mot de code d'instructions d'un code d'instructions ayant une pluralité de mots de code d'instructions, chaque mot de code d'instructions étant affecté à une instruction d'un ensemble d'instructions, un groupe d'instructions comportant des instructions d'un ensemble d'instructions étant présent, les instructions du groupe d'instructions pouvant être exécutées en fonction d'une décision (32) dans le programme en alternance les unes aux autres, les mots de code affectés étant différents les uns des autres et étant réalisés de telle manière qu'une propriété d'un circuit détectable par une mesure, qui dépend d'un traitement des mots de code d'instructions, est, pour les mots de code d'instructions du groupe d'instructions, dans une zone prédéterminée, la zone prédéterminée étant petite ou sensiblement égale à zéro, comportant les étapes suivantes :
codage d'une instruction obtenue et émission d'un mot de code d'instructions pour l'instruction suivant le code d'instructions ; et
traitement du mot de code d'instructions émis.
